# EUROPÄISCHE PATENTSCHRIFT

(11) **EP 3 702 629 B1**
(45) Veröffentlichungstag und Bekanntmachung des Hinweises auf die Patenterteilung: **30.08.2023**
(21) Anmeldenummer: 20158214.5
(22) Anmeldetag: 19.02.2020
(51) Int. Cl.: F16B 13/12, E06B 1/60

(54) **UNIVERSELLES MONTAGESET ZUM MONTIEREN EINES RAHMENS AN EINEM UNTERGRUND**
UNIVERSAL ASSEMBLY SET FOR MOUNTING A FRAME TO A BASE
ENSEMBLE DE MONTAGE UNIVERSEL PERMETTANT DE MONTER UN CADRE SUR UN TERRAIN NATUREL

(30) Priorität: 28.02.2019 DE 102019105126
(43) Veröffentlichungstag der Anmeldung: 02.09.2020
(73) Patentinhaber: Adolf Würth GmbH & Co. KG, 74653 Künzelsau (DE); Würth International AG, 7000 Chur (CH)
(72) Erfinder: Küenzlen, Jürgen, 71570 Oppenweiler (DE); Wied, Eberhard, 74427 Fichtenberg (DE); Wieland, Achim, 74211 Leingarten (DE); Immel, Torsten, 74542 Döttingen (DE)
(74) Vertreter: Dilg, Haeusler, Schindelmann Patentanwaltsgesellschaft mbH

(56) Entgegenhaltungen:
- EP-A1- 0 810 376
- EP-A2- 0 400 535
- DE-U1-202004 004 893

## Beschreibung

Die Erfindung betrifft ein Montageset, eine Anordnung, ein Verfahren zum Montieren eines Rahmens an einem Untergrund und eine Verwendung.

Bei der Montage eines Fensterrahmens an einer Laibung einer Wand werden herkömmlich Montagesets aus Schrauben und zugehörigen Dübeln eingesetzt. Ein Dübel wird in die Laibung gesetzt. Nachfolgend wird die Schraube durch den Fensterrahmen in den Dübel eingeführt, um den Fensterrahmen an der Laibung mit Abstand zu befestigen.

Gemäß einer ersten herkömmlichen Ausführungsform wird der Dübel durch ein Durchgangsloch in dem Fensterrahmen bis in ein Bohrloch in dem Untergrund geführt. Nachfolgend wird eine Schraube durch den Dübel geführt und schlägt mit einem Kopf an einer äußeren Hauptfläche des Fensterrahmens an. Allerdings hat ein solches Montageset den Nachteil, dass für jede Einbausituation bzw. Einbaugeometrie eine speziell ausgewählte Schraube und ein speziell ausgewählter Dübel mit geeigneten Maßen benötigt werden. Dies ist aufwendig.

Gemäß einer anderen herkömmlichen Ausführungsform wird ein Dübel nur in ein Bohrloch in dem Untergrund gesetzt. Nachfolgend wird eine Schraube durch ein Durchgangsloch in dem Fensterrahmen in den Dübel eingeführt und schlägt mit einem Kopf an einer äußeren Hauptfläche des Fensterrahmens an. Obwohl bei dieser Ausführungsform für alle Einbausituationen ein einheitlicher Dübel verwendet werden kann, muss für jede Einbausituation bzw. Einbaugeometrie eine speziell ausgewählte Schraube geeigneter Maße verwendet werden. Auch dies erfordert das aufwendige Vorhalten unterschiedlicher Schrauben an einem Montageort.

DE 10 2010 030 281 A1 offenbart ein Montagekit zum beabstandeten Montieren eines Anbauteils an einen Verankerungsgrund. Das Montagekit weist eine gehärtete Schraube mit einem Gewindeteil und einen Dübel auf. Die Schraube ist ausgebildet, bei Eindrehen in eine Bohrung in einer Betonwand selbstschneidend ein Gewinde zu bilden. Die Schraube ist eingerichtet, durch das Anbauteil hindurch in eine Bohrung in einen als Vollkörper ausgestalteten Verankerungsgrund dübelfrei eingedreht zu werden, wobei sich diese ein Gewinde in den Vollkörper schneidet. Die Schraube ist ferner eingerichtet, durch das Anbauteil hindurch in den Dübel in einer Bohrung in einem als Hohlkörper ausgestalteten Verankerungsgrund eingedreht zu werden. Bei dem Eindrehen der Schraube in den Kunststoffdübel gemäß DE 10 2010 030 281 A1 schneidet sich die Schraube in dem Kunststoffdübel ein Gewinde.

EP 0 810 376 A1 offenbart eine Schraube zur Montage von Gegenständen auf Distanz zueinander, die mittels der Schraube verbunden und fixiert werden, wobei die Schraube auf der gesamten Schraubenlänge ein Gewinde mit der gleichen Gewindesteigung besitzt, unterteilt in einen verjüngten, vorderen Gewindebereich und einen hinteren Gewindebereich, mit einem vertieft ausgeprägten Gewindeprofil.

Der Erfindung liegt die Aufgabe zugrunde, ein Montageset bereitzustellen, das für unterschiedliche Einbausituationen bzw. Einbaugeometrien und auch für problematische Kraftkonstellationen flexibel die Montage eines Rahmens an einem Untergrund ermöglicht, ohne das Mitführen einer großen Anzahl von Befestigungselementen bzw. Dübeln zu erfordern.

Diese Aufgabe wird durch die Gegenstände gemäß den unabhängigen Patentansprüchen gelöst. Weiterbildungen der Erfindung ergeben sich aus den abhängigen Ansprüchen.

Gemäß einem exemplarischen Ausführungsbeispiel der Erfindung ist ein Montageset zum Montieren eines Rahmens an einem Untergrund geschaffen, wobei das Montageset einen Dübel zum Einbringen in ein Bohrloch in dem Untergrund und ein Befestigungselement zum Durchführen durch ein Durchgangsloch in dem Rahmen und zum Einführen in den Dübel in dem Bohrloch aufweist, wobei ein erster Endabschnitt des Befestigungselements zum Einführen in das Durchgangsloch dimensioniert ist und ein Rahmengewinde zum haltenden Eingreifen in den Rahmen aufweist, und wobei ein dem ersten Endabschnitt gegenüberliegender zweiter Endabschnitt des Befestigungselements zum Einführen in den Dübel zum Befestigen des Befestigungselements mittels des Dübels in dem Untergrund ausgebildet ist, ohne dass sich der zweite Endabschnitt des Befestigungselements in dem Dübel (vorzugsweise ein Kunststoffdübel) ein Gewinde schneidet (sodass vorzugsweise das Befestigungselement in Längsrichtung bewegbar, insbesondere ohne Drehbewegung axial bewegbar, in dem Dübel aufgenommen sein ist).

Gemäß einem anderen exemplarischen Ausführungsbeispiel der Erfindung ist eine Anordnung geschaffen, die einen Untergrund, ein Montageset mit den oben beschriebenen Merkmalen, und einen Rahmen aufweist, wobei der Rahmen mittels des Montagesets an dem Untergrund befestigt oder befestigbar ist.

Gemäß einem weiteren exemplarischen Ausführungsbeispiel der Erfindung ist ein Verfahren zum Montieren eines Rahmens an einem Untergrund bereitgestellt, wobei das Verfahren ein Einbringen eines Dübels in ein Bohrloch in dem Untergrund, ein Durchführen eines Befestigungselements durch ein Durchgangsloch in dem Rahmen und ein Einführen in den Dübel in dem Bohrloch sowie ein Einführen eines ersten Endabschnitts des Befestigungselements in das Durchgangsloch derart aufweist, dass ein Rahmengewinde in dem ersten Endabschnitt in den Rahmen eingreift und den Rahmen hält, wobei das Verfahren ferner ein Einführen eines dem ersten Endabschnitt gegenüberliegenden zweiten Endabschnitts des Befestigungselements mittels des Dübels an dem Untergrund aufweist, ohne dass sich der zweite Endabschnitt des Befestigungselements in dem Dübel ein Gewinde schneidet.

Gemäß noch einem anderen exemplarischen Ausführungsbeispiel der Erfindung werden mehrere identische Montagesets mit den oben beschriebenen Merkmalen zum Montieren von jedem von einer Mehrzahl von Rahmen an einem jeweiligen Untergrund mit unterschiedlichen Setztiefen des jeweiligen Befestigungselements in dem jeweiligen Rahmen und/oder mit unterschiedlichen Abständen des jeweiligen Rahmens von dem jeweiligen Untergrund und/oder mit unterschiedlichen Eindringtiefen des jeweiligen Befestigungselements in dem jeweiligen Dübel verwendet.

Im Rahmen der vorliegenden Anmeldung kann unter dem Begriff "erster Endabschnitt" des Befestigungselements insbesondere ein Bereich des Befestigungselements verstanden werden, der sich bis zu einem bohrlochaußenseitigen Ende des ersten Befestigungselements erstreckt, insbesondere bis hin zu einem Kopf (falls vorhanden) und/oder bis hin zu einem Antrieb des Befestigungselements erstreckt. An einer äußeren Mantelfläche von zumindest einem Teil des ersten Endabschnitts kann das Rahmengewinde als Außengewinde angeformt sein. Der erste Endabschnitt kann drehend als Ganzes in ein kreiszylindrisches Durchgangsloch in dem Rahmen eingeführt werden und im eingeführten Zustand ein Gewinde in dem Rahmen schneiden.

Im Rahmen der vorliegenden Anmeldung kann unter dem Begriff "zweiter Endabschnitt" des Befestigungselements insbesondere ein im montierten Zustand am tiefsten in das Bohrloch eingeführtes Ende des Befestigungselements verstanden werden, das sich bis zu einem Ende (insbesondere einer Endspitze) des Befestigungselements hin erstreckt. Anders ausgedrückt kann der zweite Endabschnitt sich ausgehend von einem Ende (insbesondere einer Spitze) des Befestigungselements in Richtung hin zu einem Antrieb und/oder einem Kopf des Befestigungselements erstrecken.

Im Rahmen dieser Anmeldung kann unter dem Begriff "Rahmen" insbesondere ein zumindest abschnittsweise starres und eine zumindest teilweise umlaufende Struktur aufweisenden Bauteil verstanden werden, das an oder in einen von einer Laibung begrenzten Aufnahmehohlraum in einem Strukturkörper (wie zum Beispiel einer Wand) eingesetzt werden kann. Beispiele für solche Rahmen sind Fensterrahmen oder Türrahmen.

Im Rahmen dieser Anmeldung kann unter dem Begriff "Untergrund" insbesondere ein zum Verankern des Befestigungselements und des Dübels vorgesehener bzw. verwendeter Verankerungsgrund verstanden werden. Ein solcher Untergrund kann insbesondere eine Wand, weiter insbesondere eine vertikale Wand, sein. Materialien für einen solchen Untergrund sind insbesondere Beton- und Mauerwerksbaustoffe, Metall oder Kunststoffbauteile. Ferner kann ein solcher Untergrund auch ein beliebiger Kompositwerkstoff aus mehreren unterschiedlichen Materialkomponenten sein.

Im Rahmen der vorliegenden Anmeldung kann unter dem Begriff "Dübel" insbesondere eine Hülse (vorzugsweise aus Kunststoff und/oder Metall) verstanden werden, die zum Aufnehmen eines korrespondierenden Befestigungselements konfiguriert und dimensioniert ist. Ein solcher Dübel kann ferner konfiguriert sein, bei Einbringung des Befestigungselements in einen Aufnahmehohlraum der Hülse zumindest über einen Teilbereich der Axialerstreckung des Dübels hinweg nach außen hin aufzuspreizen und sich so gegenüber einem umgebenden, ausreichend stabilen Untergrund zu verkeilen. Auf diese Weise kann die in das Befestigungselement in einem Bohrloch des Verankerungsgrunds eingebrachte Dübel-Befestigungselement-Anordnung mit einer hohen Auszugskraft im ausreichend stabilen Untergrund verankert werden.

Gemäß einem exemplarischen Ausführungsbeispiel der Erfindung ist ein Montageset geschaffen, bei dem ein Dübel (insbesondere nur) in ein Bohrloch in einem Untergrund befestigt wird. Nachfolgend kann das ebenfalls zu dem Montageset gehörige Befestigungselement mit seinem zweiten Endabschnitt durch das Durchgangsloch in dem Rahmen bis in den Dübel hineingeführt werden, um dort eine gewisse Befestigung des Befestigungselements in dem Dübel und (insbesondere aufgrund eines möglichen Aufspreizens des Dübels) auch in dem Untergrund zu bewerkstelligen. Während dieses Montagevorgangs wird außerdem das Befestigungselement in dem Rahmen dadurch befestigt, dass das Rahmengewinde im ersten Endabschnitt des Befestigungselements in die Wandung des Rahmens angrenzend an das Durchgangsloch eingreift und dadurch unter Bildung eines Gewindes die Verbindung zwischen Rahmen und Befestigungselement bewerkstelligt. Dabei kann mit Vorteil der erste Endabschnitt des Befestigungselements so ausgebildet sein, dass er als Ganzes (das heißt bis hin zu einem bohrlochaußenseitigen Ende des Befestigungselements) in das (insbesondere kreiszylindrische) Durchgangsloch des Rahmens eingeführt werden kann. Dies kann bevorzugt derart erfolgen, dass kein Kopf (oder dergleichen) des Befestigungselements von außen an eine außenseitige Hauptfläche des Rahmens anschlägt, sondern bis zu einer gewünschten Tiefe in das Durchgangsloch des Rahmens eingeschraubt werden kann - ja sogar so weit eingeschraubt werden kann, dass ein Teil des Rahmengewindes in einen Zwischenraum zwischen Rahmen und Untergrund austritt. Auf diese Weise ist es ermöglicht, dass das Montageset universell für beliebige Einbaugeometrien bzw. Einbauszenarien eingesetzt werden kann, das heißt mit immer dem gleichen Befestigungselement und mit immer dem gleichen Dübel für unterschiedliche Setztiefen des Befestigungselements bzw. für unterschiedlich dicke Rahmen und/oder unterschiedliche Abstände zwischen Rahmen und Untergrund. Dabei kann das Befestigungselement außenseitig bis zu einer gewünschten Tiefe in den Rahmen eingeführt werden, um über einen immer noch ausreichend großen Bereich des Rahmengewindes kraftschlüssig den Rahmen zu halten. Auch die Eindringtiefe des Befestigungselements in den Dübel ist variabel. Durch eine resultierende universelle Einsetzbarkeit des Montagesets kann ein Benutzer das Montageset flexibel für unterschiedliche Einbausituationen anwenden, ohne dass für jede Geometrie ein separates Befestigungselement und/oder ein separater Dübel erforderlich ist. Indem durch das Ausgestalten des Dübels (insbesondere durch das Ausbilden als Kunststoffdübel) sowie durch das Ausgestalten des zweiten Endabschnitts des Befestigungselements als gewindefreier Bolzenabschnitt nur eine lose oder lockere, insbesondere nichtformschlüssige, Verbindung zwischen Dübel und Befestigungselement ausgebildet ist, bei deren Ausbildung das Befestigungselement kein Gegengewinde in dem Dübel schneidet, ist eine gewisse Anpassung des Montagesets an sich verändernde Verhältnisse im System aus Rahmen (zum Beispiel arbeitendes Holz bzw. Wärmeausdehnung) und Untergrund (zum Beispiel Rissbildung bzw. Wärmeausdehnung) ermöglicht. Dies ermöglicht eine langzeitstabile Montage eines Rahmens an einem Untergrund selbst bei problematischen Kraftkonstellationen. Auf diese Weise kann selbst in problematischen Kraftkonstellationen (zum Beispiel ausgelöst durch Rissbildung im Untergrund oder ausgeprägte Windlasten im Bereich des Rahmens) mit einem einzigen Montageset eine zuverlässige Befestigung eines Rahmens an einem Untergrund sichergestellt werden und der Anordnung eine Anpassung an sich verändernde Kraftverhältnisse ermöglicht werden.

Im Weiteren werden zusätzliche Ausgestaltungen des Montagesets, der Anordnung, des Verfahrens und der Verwendung beschrieben.

Erfindungsgemäß ist der zum Einführen in den Dübel ausgebildete zweite Endabschnitt des Befestigungselements gewindefrei, bevorzugt glatt, ausgebildet. Insbesondere kann der zweite Endabschnitt des Befestigungselements als glatter Bolzenabschnitt ohne darauf angeformtes Gewinde ausgebildet sein. Die Befestigung des Befestigungselements an dem Untergrund mittels des Dübels kann dann dadurch bewerkstelligt werden, dass der gewindefreie zweite Endabschnitt beim (insbesondere drehenden) Einführen in den Dübel den Dübel dennoch aufspreizt oder zumindest in gewisser Weise radial nach außen verschiebt und eine reibschlüssige Verbindung zwischen Untergrund und Befestigungselement, vermittelt durch den Dübel, ermöglicht. Erfindungsgemäß ist das Ausbilden eines Gewindes im zweiten Endabschnitt mit Vorteil vermieden, was die Herstellung des Montagesets vereinfacht. Gleichzeitig kann die vorzugsweise rein reibschlüssige Verbindung zwischen Dübel und gewindefreiem zweiten Endabschnitt des Befestigungselements dennoch ausreichend sein, um Windlasten aufzunehmen, wie sie beispielsweise auf einen Fensterrahmen einwirken können, der mittels des Montagesets an einer Laibung einer Wand eines Gebäudes befestigt ist. Insbesondere horizontale Befestigungen von seitlichen Rahmenabschnitten an einer solchen Wand können mittels eines gewindefreien zweiten Endabschnitts bewerkstelligt werden. Gleichzeitig ermöglicht das Einführen eines gewindefreien zweiten Endabschnitts in den Dübel eine gewisse Anpassung der Anordnung an sich ändernde Kräfteverhältnisse, beispielsweise im Falle von arbeitendem Holz eines Holzrahmens.

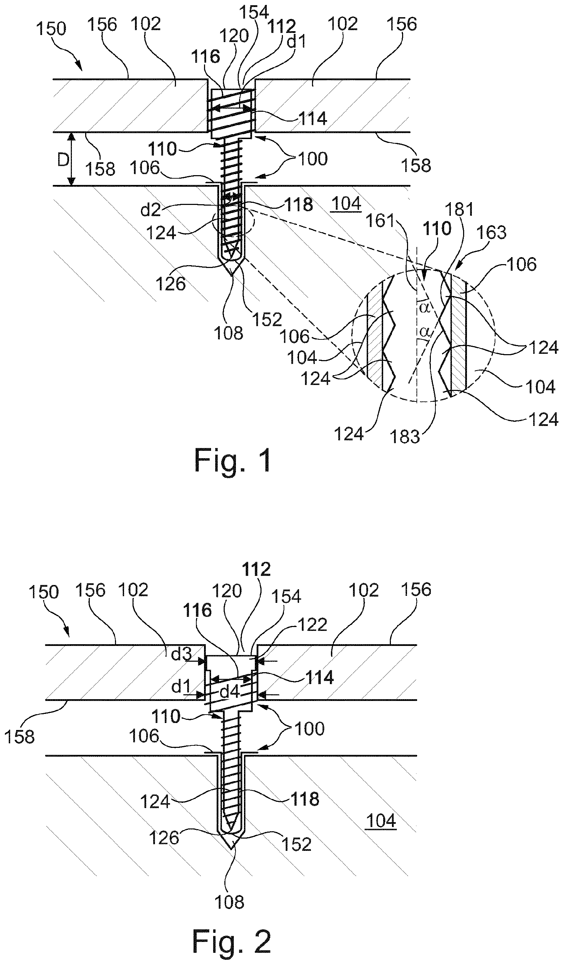

Gemäß einer Ausführungsform, die nicht durch die beanspruchte Erfindung abgedeckt ist, kann der zum Einführen in den Dübel ausgebildete zweite Endabschnitt des Befestigungselements mit einem nichtgewindeschneidenden Dübelgewinde zum Eingreifen in den Dübel ausgebildet sein. Besonders bevorzugt ist es, das Dübelgewinde als nichtschneidendes Dübelgewinde auszubilden, das sich bei drehendem Einbringen in den Dübel (insbesondere in einen Kunststoffdübel) reibschlüssig an die Innenfläche der Dübelhülse anlegt, ohne dort ein Gewinde in den Dübel zu schneiden. In entsprechender Weise kann das Verfahren ein Einführen des mit einem Dübelgewinde versehenen zweiten Endabschnitts des Befestigungselements in den Dübel aufweisen, ohne dass in dem Dübel ein Gegengewinde geschnitten wird. Alternativ zu der oben beschriebenen Ausgestaltung, wonach der zweite Endabschnitt gewindefrei sein kann, kann es gemäß der nun beschriebenen Ausführungsform vorteilhaft sein, den zweiten Endabschnitt mit einem Dübelgewinde zu versehen, das sich bei drehendem Eindringen in den Dübel allerdings mantelflächenseitig nicht in ein Inneres des Dübels einschneidet. Anschaulich kann ein solches Dübelgewinde bei einer Rissbildung in dem Untergrund ein selbsttätiges Nachspreizen des Dübels mittels des Dübelgewindes bewirken (siehe insbesondere Beschreibung zur Figur 1).

Gemäß einer Ausführungsform, die nicht von der beanspruchten Erfindung abgedeckt ist, kann das Dübelgewinde Gewindegänge aufweisen, deren (insbesondere ansteigenden und/oder abfallenden) Flanken mit einer Längsachse des Befestigungselements einen Winkel von nicht mehr als 30°, insbesondere von nicht mehr als 25°, einschließen. Es hat sich erwiesen, dass sich bei dieser Ausgestaltung des Dübelgewindes im Falle einer Rissbildung im Untergrund eine Nachspreizung des Befestigungselements im Dübel ergibt, welche die Befestigung des Befestigungselements in dem Untergrund ungeachtet der Rissbildung aufrecht erhält. Dies kann es sogar erlauben, insbesondere in erdbebengefährdeten Gegenden eine zuverlässige Montage eines Rahmens an einem Untergrund zu ermöglichen. Besonders bevorzugt ist es, wenn das beschriebene Dübelgewinde symmetrische ansteigende und abfallende Flanken an seinen Gewindegängen aufweist. Diese Symmetrie bezieht sich hierbei insbesondere auf einen identischen Winkel der ansteigenden und der abfallenden Flanken der Gewindegänge bezogen auf eine Längsachse des Befestigungselements.

Das Dübelgewinde kann einen kreiszylindrischen Dübelgewindeabschnitt und optional einen sich daran endseitig anschließenden verjüngenden Dübelgewindeabschnitt an einem Ende des zweiten Endabschnitts des Befestigungselements aufweisen. Anschaulich kann gemäß der beschriebenen Ausgestaltung das Dübelgewinde einen kreiszylindrischen Abschnitt und einen zum Beispiel kegelförmigen Endabschnitt aufweisen.

Die beschriebene Ausgestaltung des Befestigungselements mit einem nichtschneidenden Gewinde im zweiten Endabschnitt kann vorteilhaft sein, wenn eine ausreichend stabile Befestigung des Befestigungselements in dem Dübel und in dem Untergrund gewünscht wird und dennoch eine Ausgleichsfähigkeit der Anordnung aus Dübel und Befestigungselement erreicht werden soll. Dies kann zum Beispiel wünschenswert sein, wenn ein Fensterrahmen an einer Wand eines Gebäudes montiert werden soll und dabei oberseitig und/oder unterseitig in eine Laibung eingeführt werden soll.

Insbesondere kann es beim Einbau eines Fensters in eine Laibung einer Gebäudewand vorteilhaft sein, Befestigungselemente mit gewindefreien Bolzenabschnitten im Bereich des zweiten Endabschnitts zur seitlichen Befestigung des Fensterrahmens und Befestigungselemente mit nichtschneidendem Dübelgewinde zur Befestigung in einem oberen und/oder einem unteren Bereich der Laibung vorzunehmen.

Gemäß einem Ausführungsbeispiel kann der erste Endabschnitt des Befestigungselements zum vollständigen Einführen in das Durchgangsloch dimensioniert sein. Mit anderen Worten kann das Befestigungselement so ausgebildet sein, dass es als Ganzes in ein kreiszylindrisches Durchgangsloch in dem Rahmen eingeführt werden kann, dabei eine Befestigungswirkung zwischen dem Rahmengewinde des Befestigungselements und dem Rahmen bewerkstelligen kann und von einem Anschlagen des Befestigungselements an einer äußeren Hauptfläche des Rahmens frei ist. Dies ermöglicht eine von einem Benutzer frei einstellbare Eindringtiefe des Befestigungselements in Rahmen und Untergrund und erlaubt daher die universelle Verwendung nur eines Befestigungselements und nur eines Dübels für viele unterschiedliche Einbausituationen.

Gemäß einem Ausführungsbeispiel kann in einer Stirnfläche des Befestigungselements ein Antrieb zum Drehantreiben des Befestigungselements ausgebildet sein. Im Rahmen der vorliegenden Anmeldung kann unter einem "Antrieb" insbesondere eine Vertiefung in der Stirnfläche des Befestigungselements verstanden werden, die zum drehenden Eingreifen eines Antriebswerkzeugs (insbesondere eines Schraubendrehers oder eines Akkuschraubers) ausgebildet ist. Zum Beispiel kann ein solcher Antrieb ein Längsschlitz, ein Kreuzschlitz, ein Inbus, ein Torx-Antrieb, ein AW-Antrieb etc. sein. Greift ein Benutzer mit einem Antriebswerkzeug in einen solchen stirnseitigen Antrieb des Befestigungselements ein, kann durch drehendes Antreiben des Befestigungselements eine Verankerung des Befestigungselements in dem Rahmen durch Eindrehen des Rahmengewindes des Befestigungselements in den Rahmen im Bereich des Durchgangslochs bewirkt werden. Im montierten Zustand kann der Antrieb insbesondere im Inneren des Durchgangslochs des Rahmens angeordnet sein oder kann bündig mit einer Außenfläche des Rahmens abschließen.

Gemäß einem Ausführungsbeispiel kann der erste Endabschnitt des Befestigungselements als kopffreier Rahmengewindeabschnitt ausgebildet sein. Mit anderen Worten kann das Befestigungselement von einem Kopf gänzlich frei sein. Unter einem "Kopf" eines Befestigungselements kann in diesem Zusammenhang insbesondere ein radial aufgeweiteter Endabschnitt eines Befestigungselements verstanden werden, der sich an eine Außenfläche des Rahmens ringförmig anlegen kann. Ein Befestigungselement gemäß einem exemplarischen Ausführungsbeispiel kann von einem solchen Kopf jedoch gänzlich frei sein, wodurch das Einführen des ersten Endabschnitts bis zu einer gewünschten Tiefe in dem Durchgangsloch des Rahmens gefördert werden kann. Das Rahmengewinde kann sich bei einer solchen Ausgestaltung in axialer Richtung bis zu der Stirnfläche hin erstrecken.

Gemäß einem alternativen Ausführungsbeispiel kann der erste Endabschnitt des Befestigungselements mit einem Kopf und einem daran angrenzenden Rahmengewindeabschnitt ausgebildet sein, wobei ein maximaler Außendurchmesser des Kopfs einen maximalen Außendurchmesser des Rahmengewindes nicht überschreitet. Insbesondere kann der maximale Außendurchmesser des Kopfs gleich dem maximalen Außendurchmesser des Rahmengewindes sein. Bei der Verwendung kleindimensionierter Befestigungselemente kann es vorkommen, dass die Stirnfläche eines kopffreien Befestigungselements keine ausreichend große Fläche aufweist, um darin einen Antrieb (wie oben beschrieben) auszubilden, der bei Drehantrieb durch ein Antriebswerkzeug ein komfortables drehendes Einbringen des Befestigungselements ermöglicht. Insbesondere in einem solchen Szenario kann das Befestigungselement einen radial aufgeweiteten Kopf aufweisen, dessen Radius jedoch gemäß der beschriebenen Ausführungsform ausreichend klein ist, dass der Kopf als Ganzes ebenfalls in das Durchgangsloch des Rahmens eingeführt werden kann, ohne dass dadurch die Befestigung des Befestigungselements an dem Rahmen durch das Rahmengewinde des Befestigungselements beeinträchtigt wird. Dies kann dadurch erreicht werden, dass der Kopf des Befestigungselements zwar gegenüber einem Kerndurchmesser eines Schafts des ersten Endabschnitts des Befestigungselements radial aufgeweitet ist, jedoch nicht in radialer Richtung über das Rahmengewinde hervorsteht. Auf diese Weise ist ein fester Halt des Befestigungselements im Rahmen und gleichzeitig ein komfortables Eindrehen des Befestigungselements in den Rahmen durch einen ausreichend groß dimensionierten Antrieb ermöglicht.

Gemäß einem Ausführungsbeispiel kann der erste Endabschnitt des Befestigungselements einen größeren Außendurchmesser aufweisen als der zweite Endabschnitt des Befestigungselements. Anschaulich kann das Befestigungselement aus zwei Schaftabschnitten gebildet sein, die im Bereich des ersten Endabschnitts einen größeren Außendurchmesser haben als im Bereich des zweiten Endabschnitts. Dies ermöglicht einerseits das Einführen des Befestigungselements in einen ausreichend klein dimensionierten Dübel und gleichzeitig die stabile Verankerung des Befestigungselements in einem größeren Durchgangsloch (verglichen mit dem Bohrloch) in dem Rahmen.

Gemäß einem Ausführungsbeispiel kann ein dem Untergrund abgewandter Abschnitt des Durchgangslochs des Rahmens von dem Befestigungselement frei sein. Anders ausgedrückt kann das Befestigungselement derart tief in den Rahmen eingeschraubt werden, dass das Befestigungselement und das Durchgangsloch an der Außenseite des Rahmens eine Vertiefung bilden. Insbesondere kann das Rahmengewinde nur über einen Teil (insbesondere nur über einen untergrundseitigen Teil) des Durchgangslochs haltend in den Rahmen eingreifen. Ein insbesondere äußerer Bereich des Durchgangslochs kann dagegen von dem Befestigungselement frei sein. Auf diese Weise ist es möglich, eine ausreichende Verankerung des Befestigungselements an dem Rahmen und gleichzeitig ein ausreichend tiefes Einschrauben des Befestigungselements in den Dübel zu erreichen, um eine stabile Befestigung an dem Untergrund zu erzielen. Zum Beispiel kann eine ausreichende Befestigungskraft des Befestigungselements an dem Rahmen noch erreichbar sein, wenn über mindestens 50% der axialen Erstreckung des Durchgangslochs in dem Rahmen hinweg das Rahmengewinde des Befestigungselements in den Rahmen eingreift.

Gemäß einem Ausführungsbeispiel kann ein Ende (zum Beispiel eine Spitze) des Befestigungselements gegenüber einem innenseitigen Ende eines Aufnahmelochs des Dübels nach außen hin (d.h. zu dem Rahmen hin) zurückversetzt sein oder über den Dübel in Setzrichtung hinausstehen (d.h. sich tiefer in das Bohrloch hinein erstrecken als der Dübel). Es ist gemäß einem exemplarischen Ausführungsbeispiel der Erfindung daher nicht zwingend erforderlich (aber möglich und sogar vorteilhaft), dass ein Ende des Befestigungselements sich exakt bis zu einem Ende eines Aufnahmelochs des Dübels hin erstreckt. Vielmehr ist es auch möglich, einen Teil des Aufnahmelochs in axialer Richtung von dem Befestigungselement frei zu halten, um eine ausreichend stabile Befestigung des Befestigungselements an dem Rahmen über einen ausreichend großen axialen Abschnitt des Rahmengewindes hinweg zu erreichen. Auf der anderen Seite ist es aber auch möglich, den Dübel bis über das bohrlochtiefste Ende des Aufnahmelochs in dem Dübel hinaus noch tiefer in das Bohrloch einzudrehen, zum Beispiel um den ersten Endabschnitt des Befestigungselements ausreichend tief in dem Durchgangsloch des Rahmens zu versenken. Ausführungsbeispiele der Erfindung geben dem Benutzer also auch an dieser Stelle die Freiheit und Flexibilität, ein einziges Befestigungselement und einen einzigen Dübel über einen breiten Bereich von Geometrien bzw. Einbausituationen hinweg verwenden zu können.

Gemäß einem Ausführungsbeispiel kann der Rahmen in einem (von Null unterschiedlichen) Abstand von dem Untergrund entfernt montiert werden. Anders ausgedrückt kann das Montageset gemäß exemplarischen Ausführungsbeispielen der Erfindung auch für eine Abstandsmontage verwendet werden, um ein Anbauteil wie einen Rahmen in einem Abstand von dem Untergrund zu montieren. Auch in diesem Zusammenhang ist wiederum von Vorteil, das annähernd beliebig tiefe Setzen des ersten Endabschnitts des Befestigungselements in den Rahmen und/oder des zweiten Endabschnitts in den Dübel über einen breiten Bereich hinweg variieren zu können.

Gemäß einem Ausführungsbeispiel kann der Dübel nur in das Bohrloch und nicht in das Durchgangsloch eingeführt sein. Wenn der Dübel nur in das Bohrloch eingesetzt wird, ohne sich auch durch den Rahmen bzw. einen Abstand zwischen Rahmen und Untergrund hindurch zu erstrecken, ist die Dübellänge nur von der Tiefe des Bohrlochs abhängig und somit sowohl von der Dicke des Rahmens als auch von einem gewünschten Abstand des Rahmens vom Untergrund unabhängig. Somit trägt die Einführung des Dübels nur in das Bohrloch, nicht aber bis in den Bereich des Rahmens hinein dazu bei, dass das Montageset für unterschiedliche Einbauszenarien mit einem einzigen Dübel auskommt.

Gemäß einem Ausführungsbeispiel kann der Rahmen ein Fensterrahmen oder Türrahmen sein. Im Falle eines Fensters wird eine Laibung in der Wand durch vier miteinander ringförmig verbundene ebene Flächenabschnitte gebildet. Bei einer Tür hingegen kann eine Laibung durch drei miteinander verbundene Wandflächenabschnitte und einen Bereich des Bodens abgegrenzt werden.

Gemäß einem Ausführungsbeispiel kann das Verfahren ein vollständiges Einführen des ersten Endabschnitts des Befestigungselements in das Durchgangsloch derart aufweisen, dass eine außenseitige Stirnfläche des Befestigungselements nicht über eine dem Untergrund abgewandte Hauptfläche des Rahmens hervorsteht. Insbesondere kann das außenseitige Ende des Befestigungselements im Inneren des Durchgangslochs angeordnet sein oder bündig mit dem Durchgangsloch abschließen bzw. mit einer Außenfläche des Rahmens fluchten. Durch die Einstellung der Setztiefe des Befestigungselements in dem Rahmen kann eine Anpassung an herrschende geometrische Bedingungen der Einbausituation vorgenommen werden, ohne dass auf eine Mehrzahl unterschiedlich langer Befestigungselemente bzw. Dübel zurückgegriffen werden muss.

Gemäß einem Ausführungsbeispiel kann das Verfahren ein Einführen des ersten Endabschnitts des Befestigungselements in das Durchgangsloch derart aufweisen, dass das Rahmengewinde zu einem ersten Teil in den Rahmen eingreift und zu einem anderen zweiten Teil gegenüber einer dem Untergrund zugewandten Hauptfläche des Rahmens hervorsteht. Beispielsweise kann der erste Teil mindestens 50 % der axialen Erstreckung des Rahmengewindes ausmachen. Dann kann ein außenseitiger Abschnitt des Durchgangslochs des Rahmens von dem Befestigungselement frei sein, ein innenseitiger Bereich des Durchgangslochs des Rahmens von dem Befestigungselement ausgefüllt sein und ein überstehender Bereich des ersten Endabschnitts des Befestigungselements über die Innenfläche des Rahmens überstehend angeordnet sein. Zwar kann der zuletzt genannte überstehende Bereich des ersten Endabschnitts zur Befestigungswirkung des Befestigungselements im Rahmen nichts beitragen, was jedoch unerheblich ist, sofern ein verbleibender anderer Abschnitt des Rahmengewindes des Befestigungselements über eine ausreichend große Axialerstreckung hinweg in den Rahmen eingreift und diesen hält.

Gemäß einem Ausführungsbeispiel kann das Verfahren ein Einführen des zweiten Endabschnitts des Befestigungselements in den Dübel derart aufweisen, dass ein freies Ende des zweiten Endabschnitts genau bis zu einem Ende einer Einführöffnung des Dübels reicht. Alternativ kann die Erstreckung des zweiten Endabschnitts in die Aufnahmeöffnung des Dübels hinein auch so ausgewählt werden, dass ein Teil der Einführöffnung des Dübels von dem Befestigungselement frei bleibt. Weiter alternativ kann ein Ende des zweiten Endabschnitts des Befestigungselements über ein bohrlochtiefstes Ende der Aufnahmeöffnung des Dübels hinausstehen. Auch was die Befestigung des Befestigungselements im Dübel anbetrifft, kann über einen größeren räumlichen Bereich hinweg ein Überstehen der Einführöffnung über den zweiten Endabschnitt oder ein Überstehen des zweiten Endabschnitts über die Dübelöffnung erreicht werden. Auf diese Weise ist auch dübelseitig eine flexible Anpassung der Montage des Montagesets auf die gegebenen Einbaugeometrien ermöglicht.

Gemäß einem Ausführungsbeispiel weist das Verfahren ein Einführen des zweiten Endabschnitts des Befestigungselements in den Dübel unter Verspreizung des Dübels gegen eine Wandung des Untergrunds auf. Anschaulich kann ein Einführen des zweiten Endabschnitts des Befestigungselements in den Dübel in eine Aufnahmeöffnung des Dübels dazu führen, dass Spreizschenkel oder andere Spreizelemente des Dübels seitlich aufspreizen und sich gegen eine Wandung des Untergrunds drücken, die durch das Bohrloch begrenzt wird.

Gemäß einem Ausführungsbeispiel kann das Verfahren ein reibschlüssiges Einführen des gewindefreien zweiten Endabschnitts (der insbesondere als glatter Bolzenabschnitt ausgebildet sein kann) des Befestigungselements in den Dübel aufweisen. Mit anderen Worten kann eine Befestigungswirkung des Befestigungselements in dem Dübel lediglich durch Reibung zwischen einer Mantelfläche des Befestigungselements im zweiten Endabschnitt und einer Innenwandung des Dübels bewerkstelligt werden.

Gemäß einem Ausführungsbeispiel kann das Befestigungselement eine Schraube sein. Eine solche Schraube kann einen Schraubenschaft und optional einen Schraubenkopf aufweisen. Auch kann eine Schraube ein Schraubenende aufweisen, das zum Beispiel als punktförmige Spitze oder Bohrspitze ausgebildet sein kann. Der Schaft der Schraube kann zumindest über einen Teilbereich davon mit einem oder mehreren Gewinden versehen sein. In dem optionalen Kopf oder einer Stirnfläche der Schraube kann ein Antrieb ausgebildet sein, zum Beispiel ein Längsschlitz, ein Kreuzschlitz, ein AW-Antrieb oder ein Torx-Antrieb. Die Schraube kann beispielsweise aus einem metallischen Material, zum Beispiel Stahl oder Eisen, hergestellt sein. Optional kann zumindest ein Oberflächenbereich der Schraube gehärtet sein.

Die beschriebene Architektur zum Ausbilden einer Schraube-Dübel Anordnung ist mit verschiedenartigen Schraubentypen kompatibel. Als Schrauben können sowohl solche mit Vollgewinde oder Teilgewinde am Schraubenschaft oder auch Bohrschrauben verwendet werden.

Mögliche Untergründe, in welche der Dübel und das Befestigungselement eingebracht werden kann, sind Stein, Beton, Metall, Holz, etc. Solche Untergründe können makroskopische Hohlräume aufweisen oder von makroskopischen Hohlräumen frei sein.

Im Weiteren werden Bezug nehmend auf die Figuren weitere Ausführungsbeispiele der Erfindung beschrieben.

Es zeigen:
Figur 1 eine Anordnung aus einem Montageset, einem Rahmen und einem Untergrund gemäß einer Ausführungsform, die nicht durch die beanspruchte Erfindung abgedeckt ist.
Figur 2 eine Anordnung aus einem Montageset, einem Rahmen und einem Untergrund gemäß einer anderen Ausführungsform, die nicht durch die Erfindung abgedeckt ist.
Figur 3 eine Anordnung aus einem Montageset, einem Rahmen und einem Untergrund gemäß einem weiteren Ausführungsbeispiel der Erfindung.
Figur 4 eine Anordnung aus einem Montageset, einem Rahmen und einem Untergrund gemäß noch einer anderen Ausführungsform, die nicht durch die Erfindung abgedeckt ist.
Figur 5 eine Anordnung aus einem Montageset, einem Rahmen und einem Untergrund gemäß einer weiteren Ausführungsform, die nicht durch die Erfindung abgedeckt ist.
Figur 6 eine Anordnung aus einem Montageset, einem Rahmen und einem Untergrund gemäß noch einem anderen Ausführungsbeispiel der Erfindung.
Figur 7 und Figur 8 herkömmliche Anordnungen aus Untergrund, Rahmen, Schraube und Dübel.
Figur 9 eine Anordnung aus Untergrund, Rahmen und mehreren Montagesets, jeweils gebildet aus Befestigungselement und Dübel, gemäß einem exemplarischen Ausführungsbeispiel der Erfindung.

Entsprechende Elemente sind in unterschiedlichen Figuren mit entsprechenden Bezugszeichen bezeichnet.

Bevor unter Bezugnahme auf die Figuren exemplarische Ausführungsbeispiele der Erfindung näher erläutert werden, werden einige allgemeine Überlegungen beschrieben, auf deren Basis exemplarische Ausführungsbeispiele der Erfindung aufgefunden wurden.

Gemäß einem exemplarischen Ausführungsbeispiel der Erfindung ist ein Montageset bzw. Montagekit für die Montage eines Rahmens (insbesondere für die Fenstermontage) geschaffen, bei dem ein Satz aus einem einzigen Dübel und einem einzigen (insbesondere schraubenartigen) Befestigungselement für unterschiedliche Einbauanwendungen bzw. Einbaugeometrien ausreichend sein kann. Ein solches Montageset kann auch in problematischen Kraftkonstellationen eingesetzt werden, zum Beispiel wenn ein Fensterrahmen im Betrieb hohen Windlasten ausgesetzt ist und/oder wenn in einem Untergrund (zum Beispiel Beton) nach dem Setzen eine Rissbildung auftritt.

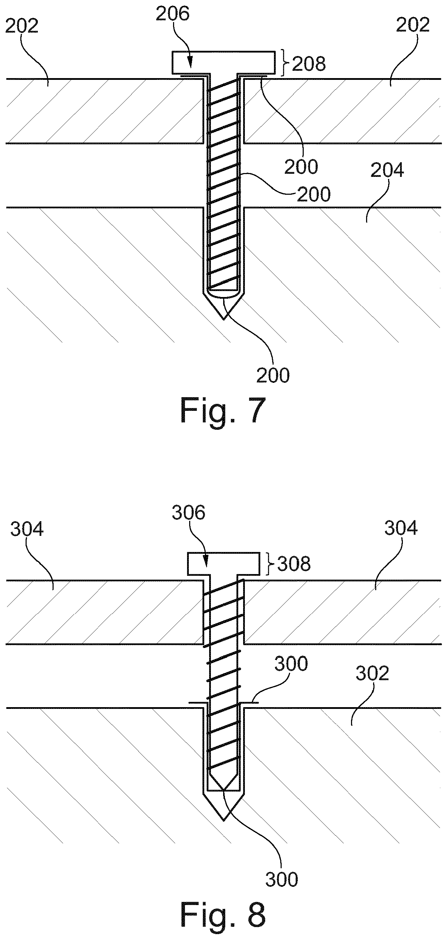

Gemäß einem herkömmlichen Ansatz, der in **Figur 7** dargestellt ist, wird ein Dübel 200 durch einen Fensterrahmen 202 in einen Untergrund 204 aus Beton gesteckt. Ein Schraubenkopf einer Schraube 206 bildet einen oberen Endabschnitt 208 der Schraube 206 und liegt mit einer Unterseite flächig auf einer äußeren Hauptoberfläche des Fensterrahmens 202 auf. Für jeden Anwendungsfall muss ein Dübel 200 und muss eine Schraube 206 passender Längen ausgesucht werden. Dies ist aufwendig.

Gemäß einem anderen herkömmlichen Ansatz, der in **Figur 8** dargestellt ist, wird immer der gleiche Dübel 300 verwendet und dieser lediglich in den Untergrund 302 gesteckt, um Fensterrahmen 304 zu montieren. Allerdings müssen für unterschiedliche Einbausituationen unterschiedlich lange Schrauben 306 individuell ausgesucht werden. Ein Schraubenkopf der Schraube 306 bildet einen oberen Endabschnitt 308 der Schraube 306 und liegt mit einer Unterseite flächig auf einer äußeren Hauptoberfläche des Fensterrahmens 304 auf.

Gemäß einem exemplarischen Ausführungsbeispiel der Erfindung wird zur Montage eines Rahmens (insbesondere zur Fenstermontage) nur ein Dübel (insbesondere ein XXL-Dübel oder ein W-UR-Dübel der Firma Würth) mit nur einem Befestigungselement (zum Beispiel einer AMO-Schraube der Firma Würth) eingesetzt. Nach der Montage kann der Schraubenkopf zum Beispiel bündig mit dem Fensterrahmen abschließen. Das beschriebene Montageset erlaubt eine Variabilität hinsichtlich des Umstands, wie weit die Schraube im Dübel steckt. Ein Abstand zwischen einem Fensterrahmen und einer Laibung kann in bestimmten Einbausituationen unbekannt sein. Die Schraube kann also verschieden tief im Dübel angeordnet sein, wenn der Kopf des Befestigungselements oder ein entsprechender Endabschnitt eines kopffreien Befestigungselements bündig mit dem Fensterrahmen abschließt. Es kann also mit einer Schraube (bzw. allgemeiner mit einem Befestigungselement) und einem Dübel über breite Bereiche hinweg im Wesentlichen jeder Montagefall abgedeckt werden.

Gemäß einer Ausführungsform, die nicht durch die beanspruchte Erfindung abgedeckt ist, kann die Schraube ein bei Einbringen in einen Kunststoffdübel kein Gewinde schneidendes Dübelgewinde aufweisen. Auf diese Weise ist es möglich, auch ein Setzen in einem gerissenen oder reißenden Betonuntergrund durchzuführen, da durch den beschriebenen Dübelgewindeabschnitt (vorzugsweise mit geringem Flankenwinkel bezogen auf eine Längsachse des Befestigungselements) anschaulich eine Nachspreizung des Dübels und damit eine Verbesserung der Setzkraft selbst bei auftretenden Rissen im Untergrund erreichbar ist.

Insbesondere bei einem Kunststoff-Fensterrahmen kann ein bündiges Abschließen des Befestigungselements mit dem Rahmen gewünscht sein. Ein bündiges Abschließen ist also insbesondere bei Kunststofffenstern vorteilhaft, insbesondere wenn diese an einem außenseitigen Ende und/oder am gegenüberliegenden Ende einen umlaufenden Metallrahmen zur Befestigung haben. Würde die Schraube bzw. das Befestigungselement tiefer eingeschraubt, würde sie nur noch in die dem Untergrund zugewandte Metalllasche greifen. Der Fensterrahmen wäre dann eventuell nicht mehr ausreichend befestigt. Bei anders ausgebildeten Kunststoffrahmen besteht hingegen eine völlige Freiheit hinsichtlich der Montage.

Insbesondere bei Fensterrahmen aus Holz ist es jedoch auch möglich, eine Schraube ohne Kopf oder mit Kopf mit ausreichend geringer Radialerstreckung verschieden tief in den Fensterrahmen zu setzen. Die Schraube steht dann im Untergrund auch verschieden tief aus dem Dübel heraus.

Gemäß einem exemplarischen Ausführungsbeispiel der Erfindung ist somit ein Montageset bzw. Montagesatz zur Montage eines Rahmens (insbesondere eines Fensterrahmens) mit Dübel und (zumindest abschnittsweise) schraubenartigem Befestigungselement bereitgestellt.

Erfindungsgemäß weist das Befestigungselement in einem zweiten Endabschnitt einen gewindefreien Bolzen auf und kann in einem gegenüberliegenden ersten Endabschnitt mit einem Rahmengewinde zum Einführen in ein Gegengewinde in dem Durchgangsloch des Rahmens ausgebildet sein. Es ist auch möglich (zum Beispiel bei einem Holzrahmen), dass sich das Rahmengewinde des ersten Endabschnitts des Befestigungselements selbstschneidend in eine das Durchgangsloch in dem Rahmen begrenzende Wandung des Rahmens einschneidet. Anders ausgedrückt kann das Rahmengewinde auch selbstfurchend bzw. selbstschneidend sein. In dem zweiten Endabschnitt ist erfindungsgemäß ein gewindefreier Bolzenabschnitt vorzusehen, was ein Walzen eines Dübelgewindes entbehrlich macht. Dies vereinfacht die Herstellung des Befestigungselements. Mit einem dort ausreichend dick vorgesehenen Schaft kann eine hohe Biegesteifigkeit erreicht werden. Dann ist bei reibschlüssigem Eingriff zwischen Dübel und gewindefreiem zweiten Endabschnitt auch eine Aufnahme von Windkräften und dergleichen ermöglicht. Anschaulich kann bei dem Montageset dann ein anpassungsfähiges Lager für die befestigte Anordnung im Untergrund (zum Beispiel einer Wand) liegen, was auch einen Ausgleich von Temperaturschwankungen des Rahmens ermöglicht. Darüber hinaus kann mit einem Montageset gemäß einem exemplarischen Ausführungsbeispiel der Erfindung ein Durchdrehen des Dübels in filigranem Stein verhindert werden.

Gemäß einer anderen Ausführungsform, die nicht durch die Erfindung abgedeckt ist, kann vorteilhaft ein Befestigungselement in dem genannten zweiten Endabschnitt mit einem Dübelgewinde ausgestattet werden, das in einem Dübel kein Gegengewinde schneidet. Dies erlaubt ein Setzen auch in gerissenem Beton, da ein solches nichtschneidendes Dübelgewinde nachspreizen kann, wenn ein Riss im Boden entsteht.

Mit Vorteil kann gemäß einem exemplarischen Ausführungsbeispiel ein Montageset geschaffen werden, bei dem alle Dübel gleich lang und alle Befestigungselemente gleich lang (und vorzugsweise auch insgesamt vollständig gleich) ausgebildet sind. Ein entsprechendes Befestigungselement kann kopffrei oder mit einem derart kleinen Kopf ausgebildet sein, dass ein Einführen auch des Kopfs in das Durchgangsloch in dem Rahmen ermöglicht ist, ohne dass dadurch die Befestigung des Befestigungselements am Rahmen durch das in den Rahmen eingreifende Rahmengewinde beeinträchtigt wird. Das Befestigungselement (das insbesondere schraubenartig ausgebildet sein kann) kann beliebig tief in den Rahmen (insbesondere einen Fensterrahmen) gedreht werden, was durch den ausreichend kleinen Kopf oder eine kopffreie Ausgestaltung ermöglicht werden kann. Die Schraube kann verschieden tief im Dübel stecken und kann sogar darüber hervorstehen. Für alle Anwendungsfälle kann ein und dasselbe Montageset verwendet werden.

**Figur 1** zeigt eine Anordnung 150 gemäß einer Ausführungsform, die nicht durch die Erfindung abgedeckt ist. Die Anordnung 150 weist einen als Betonwand ausgebildeten Untergrund 104, ein im Weiteren näher beschriebenes Montageset 100 aus einem Befestigungselement 110 und einem Dübel 106 und einen hier als Fensterrahmen ausgebildeten Rahmen 102 auf. Wie in Figur 1 dargestellt, ist der Rahmen 102 mittels des Montagesets 100 an dem Untergrund 104 in einem vorgegebenen Abstand D befestigt. Einer äußeren Begrenzungsfläche 156 des Rahmens 102 liegt dessen innere Begrenzungsfläche 158 gegenüber, die in dem Abstand D von dem Untergrund 104 angeordnet ist.

Das in Figur 1 dargestellte Montageset 100 dient also zur Abstandsmontage des Rahmens 102 an dem Untergrund 104 und weist den hier als Kunststoffdübel ausgebildeten Dübel 106 und das hier als schraubenartiger Edelstahlkörper ausgebildete Befestigungselement 110 auf. Wie in Figur 1 dargestellt, ist in dem Untergrund 104 ein Bohrloch 108 gebildet (insbesondere gebohrt oder in anderer Weise erzeugt). Nachfolgend wird der Dübel 106 zum Beispiel mittels eines Hammers in das Bohrloch 108 - und nur in dieses - eingetrieben. Mit anderen Worten erstreckt sich der Dübel 106 nicht durch Durchgangsloch 112 in dem Rahmen 102 hindurch. Dadurch ist die benötigte Länge des Dübels 106 nur durch die vorgebbare axiale Länge des Bohrlochs 108 bedingt. Es kann also ein einziger Dübel 106 für viele unterschiedlichen Einbausituationen verwendet werden.

Das Befestigungselement 110 wird bei der Montage durch das hier kreiszylindrische Durchgangsloch 112 in dem Rahmen 102 durchgeführt und in den in dem Bohrloch 108 eingeführten Dübel 106 drehend eingeführt. Letzteres erfolgt in der Weise, dass sich ein Rahmengewinde 116 in einem ersten Endabschnitt 114 des Befestigungselements 110 in dem Durchgangsloch 112 in dem Rahmen 102 ein Gegengewinde schneidet, wodurch das Befestigungselement 110 an dem Rahmen 102 befestigt wird. Ferner erfolgt das Setzen des Befestigungselements 110, ohne dass sich ein zweiter Endabschnitt 118 des Befestigungselements 110 in dem Dübel 106 ein Gewinde schneidet. Dies resultiert aus der besonderen Formgebung eines im zweiten Endabschnitt 118 gebildeten Dübelgewindes 124 mit geringen Flankenwinkel, wie nachfolgend beschrieben. Das Befestigungselement 110 verbleibt daher relativ locker oder lose bzw. ohne strengen Formschluss in dem Dübel 106. Im Falle einer Rissbildung in dem Untergrund 104 kann die Hülse des Dübels 106 geringfügig erweitert werden, ohne sich axial zu verschieben. Infolge dieser geringfügigen radialen Erweiterung wird das Befestigungselement 110 auch geringfügig nach außen gezogen, wobei sich diese axiale Bewegung aufgrund der flachen Gewindeflanken des Dübelgewindes 124 in eine radiale Kraft nach außen umsetzt. Als Ergebnis daraus wird die Dübelhülse nachgespreizt. Aufgrund dieser Ausgestaltung des Dübelgewindes 124 ist das Befestigungselement 110 auch dann zuverlässig verankert, wenn es zu einer Rissbildung im Untergrund 104 kommt.

Der zuletzt beschriebene Effekt ist in einem Detail 163 von Figur 1 näher dargestellt, wo die Ausgestaltung eines Teils des zweiten Endabschnitts 118 des Befestigungselements 110 veranschaulicht ist. Wie Detail 163 zeigt, sind die ansteigenden Flanken 183 und die abfallenden Flanken 181 des Dübelgewindes 124 des Befestigungselements 110 so ausgebildet, dass ein jeweiliger Flankenwinkel α mit einer Längsachse 161 des Befestigungselements 110 nicht mehr als 30°, vorzugsweise nicht mehr als 25° beträgt. Wie in Detail 163 zu erkennen ist, beträgt der spitze Flankenwinkel α zwischen einer abfallenden Flanke 181 und der Längsachse 161 maximal 30° und beträgt der spitze Flankenwinkel α zwischen einer ansteigenden Flanke 183 und der Längsachse 161 ebenfalls maximal 30°. Bevorzugt, aber nicht zwingend sind die beiden genannten Flankenwinkel α, α identisch und ist das zugehörige Dübelgewinde 124 folglich symmetrisch. Das Dübelgewinde 124 hat also Gewindegänge, die in einer Seitenansicht bzw. einer Querschnittsansicht die Form eines abgeflachten Dreiecks haben.

Der bohrlochaußenseitige erste Endabschnitt 114 des Befestigungselements 110 ist teils in das Durchgangsloch 112 eingeführt und an einem unteren Ende sogar durch das Durchgangsloch 112 unterseitig überstehend hindurchgeführt. Der erste Endabschnitt 114 des Befestigungselements 110 ist also so dimensioniert, das heißt hat einen ausreichend geringen Außendurchmesser d1, um vollständig in das Durchgangsloch 112 eingeführt werden zu können, ohne an der äußeren Begrenzungsfläche 156 des Rahmens 102 anzuschlagen. Gleichzeitig ist das Rahmengewinde 116 an einer Mantelfläche des kreiszylindrischen ersten Endabschnitts 114 des Befestigungselements 110 so dimensioniert und ausgebildet, dass es in eine das Durchgangsloch 112 begrenzende Mantelfläche des Rahmens 102 halternd (insbesondere unter Bilden eines Gegengewindes formschlüssig) eingreift. Mit anderen Worten ist das Befestigungselement 110 an dem Rahmen 102 mittels des Rahmengewindes 116 befestigt. Das Rahmengewinde 116 kann entweder in ein bereits vorhandenes Gegengewinde in dem Durchgangsloch 112 eingeschraubt werden oder kann selbstfurchend bzw. selbstschneidend ein Gegengewinde in dem Rahmen 102 erzeugen.

Darüber hinaus weist das Befestigungselement 110 den einstückig an dem ersten Endabschnitt 114 angeformten zweiten Endabschnitt 118 auf, der ein bohrlochseitiges Ende des Befestigungselements 110 bildet. Der zweite Endabschnitt 118 wird bei der Montage also in den Dübel 106 eingeführt und kann zum Beispiel ein Spreizen von Spreizelementen des Dübels 106 auslösen, so dass sich die Spreizelemente des Dübels 106 befestigend gegen die Wandung des Untergrunds 104 verpressen, ohne allerdings ein Gewinde im Dübel 106 zu schneiden. Somit fungiert der zweite Endabschnitt 118 zum Befestigen des Befestigungselements 110 an dem Untergrund 104.

Gemäß Figur 1 ist das Befestigungselement 110 vollständig durch die äußere Hauptoberfläche oder Begrenzungsfläche 156 des Dübels 102 hindurchgeführt, so dass der erste Endabschnitt 114 genau teilweise in dem Durchgangsloch 112 und teilweise in einem Abstandsbereich zwischen Rahmen 102 und Untergrund 104 angeordnet ist. Der zweite Endabschnitt 118 ist teilweise in dem Dübel 106 und zu einem anderen Teil in dem Abstandsbereich zwischen Rahmen 102 und Untergrund 104 angeordnet. Ein dem Untergrund 104 abgewandter Abschnitt des Durchgangslochs 112 ist daher von dem Befestigungselement 110 frei. Gemäß Figur 1 ist ein Ende 126 des Befestigungselements 110 an einem innenseitigen Ende 152 eines Aufnahmelochs des Dübels 106 angeordnet.

Wie ebenfalls Figur 1 zu entnehmen ist, ist der erste Endabschnitt 114 des Befestigungselements 110 zum vollständigen Einführen in das Durchgangsloch 112 dimensioniert, das heißt schlägt beim fortgesetzten Einführen nicht außenseitig an die Hauptoberfläche 156 an. Dadurch kann ein Benutzer je nach Einbausituation das Befestigungselement 110 durch Ansetzen eines nicht gezeigten Antriebselements an einen Antrieb 120 in einer Stirnfläche 154 des Befestigungselements 110 Letzteres bis zu einer gewünschten Tiefe in den Rahmen 102 und in den Untergrund 104 einführen. Auf diese Weise ist es möglich, für unterschiedliche Einbausituationen bzw. Einbaugeometrien jeweils ein und dasselbe Befestigungselement 110 und ein und denselben Dübel 106 zu verwenden, ohne Befestigungselemente bzw. Dübel unterschiedlicher Längen vorhalten zu müssen.

Der nur schematisch dargestellte Antrieb 120 kann zum Beispiel ein Längsschlitz, Kreuzschlitz, Inbus, Torx-Antrieb oder AW-Antrieb sein. Das Antriebswerkzeug kann zum Beispiel ein Schraubendreher oder Akkuschrauber sein.

Gemäß Figur 1 ist der erste Endabschnitt 114 als kopffreier Rahmengewindeabschnitt ausgebildet. Anders ausgedrückt ist der erste Endabschnitt 114 gemäß Figur 1 ein kreiszylindrischer Schaftabschnitt mit außenseitig angeformtem Rahmengewinde 116. Es ist kein radial aufgeweiteter Kopf am oberen Ende des Befestigungselements 110 gemäß Figur 1 vorgesehen. Dies ermöglicht das Einführen des Befestigungselements 110 bis zu einer beliebig wählbaren Tiefe in Rahmen 102 bzw. Untergrund 104.

In Figur 1 ist ferner gezeigt, dass auch im zweiten Endabschnitt 118 des Befestigungselements 110 ein Außengewinde vorgesehen ist, das als Dübelgewinde 124 bezeichnet wird. Das Dübelgewinde 124 kann zum Andrücken an eine Innenwandung des als Kunststoffdübel ausgebildeten Dübels 106 verwendet werden, ohne sich dort aber ein Gegengewinde zu schneiden. Wie in Figur 1 dargestellt, hat das Dübelgewinde 124 einen kreiszylindrischen Dübelgewindeabschnitt, der dem ersten Endabschnitt 114 zugewandt ist, und hat einen sich an den kreiszylindrischen Dübelgewindeabschnitt endseitig anschließenden verjüngenden Dübelgewindeabschnitt an einem konisch zulaufenden Ende 126 des zweiten Endabschnitts 118 des Befestigungselements 110. Es hat sich erwiesen, dass das Ausbilden des zweiten Endabschnitts 118 mit einem Dübelgewindeabschnitt mit ausreichend flachen Gewindegängen eine Nachverspreizung des Dübels 106 im Falle einer Rissbildung im Untergrund 104 auslöst und dadurch die Befestigungskraft verbessert.

Zur Montage der Anordnung 150 wird der Rahmen 102 in einem gewünschten Abstand D zu dem Untergrund 104 angeordnet, in dem bereits zuvor das Bohrloch 108 gebildet wurde. Mittels eines Antriebswerkzeugs, das in den Antrieb 120 in der Stirnfläche 154 des Befestigungselements 110 eingreift, wird eine drehende Setzkraft auf das Befestigungselement 110 ausgeübt. Infolgedessen dringt der zweite Endabschnitt 118 in den Dübel 106 ein, der zuvor in das Bohrloch 108 eingesetzt wurde. Durch Eindrehen des Befestigungselements 110 wird auch der erste Endabschnitt 114 in das Durchgangsloch 112 des Rahmens 102 eingeführt und bis zu einer gewünschten axialen Position vorwärtsgetrieben. In der in Figur 1 dargestellten Setzkonfiguration befestigt das Rahmengewinde 116 den ersten Endabschnitt 114 des Befestigungselements 110 rigide am Rahmen 102 und befestigt das Dübelgewinde 124 den zweiten Endabschnitt 118 loser am Dübel 106 und daher mittelbar am Untergrund 104.

Wie ferner in Figur 1 dargestellt, ist der kreiszylindrische erste Endabschnitt 114 des Befestigungselements 110 mit einem größeren Außendurchmesser d1 ausgebildet als ein Außendurchmesser d2 des zweiten Endabschnitts 118 im Bereich des kreiszylindrischen Dübelgewindeabschnitts.

Eine in **Figur 2** dargestellte Anordnung 150 gemäß einer anderen Ausführungsform, die nicht durch die beanspruchte Erfindung abgedeckt ist, unterscheidet sich von der Ausführungsform gemäß Figur 1 zum einen dahingehend, dass gemäß Figur 2 das Befestigungselement 110 mit einem Kopf 122 versehen ist. Dabei ist der Kopf 122 am oberen Ende des Befestigungselements 110 angebracht und bildet daher ein oberes Ende des ersten Endabschnitts 114. Der Kopf 122 und der daran angrenzende Rahmengewindeabschnitt sind ausgebildet, dass ein Außendurchmesser d3 des Kopfs einen Außendurchmesser d4 des Rahmengewindes nicht überschreitet. Allerdings kann der Außendurchmesser d3 des Kopfs 122 größer als ein Kerndurchmesser d5 des ersten Endabschnitts 114 sein. Auf diese Weise kann sichergestellt werden, dass durch den Kopf 122 als radial aufgeweitetes Ende des Befestigungselements 110 ein ausreichend großer Antrieb 120 in der Stirnfläche 154 des Befestigungselements 110 ausgebildet werden kann, um ein kraftarmes und zuverlässiges Eindrehen des Befestigungselements 110 beim Montieren zu ermöglichen. Andererseits ist durch die beschriebenen Größenverhältnisse auch sichergestellt, dass der Kopf 122 in das Durchgangsloch 112 des Rahmens 102 eingeführt werden kann, ohne dass dadurch das Ausbilden einer Gewindeverankerung zwischen dem Rahmengewinde 116 und einer umgebenden Wandung des Rahmens 102 beeinträchtigt wird.

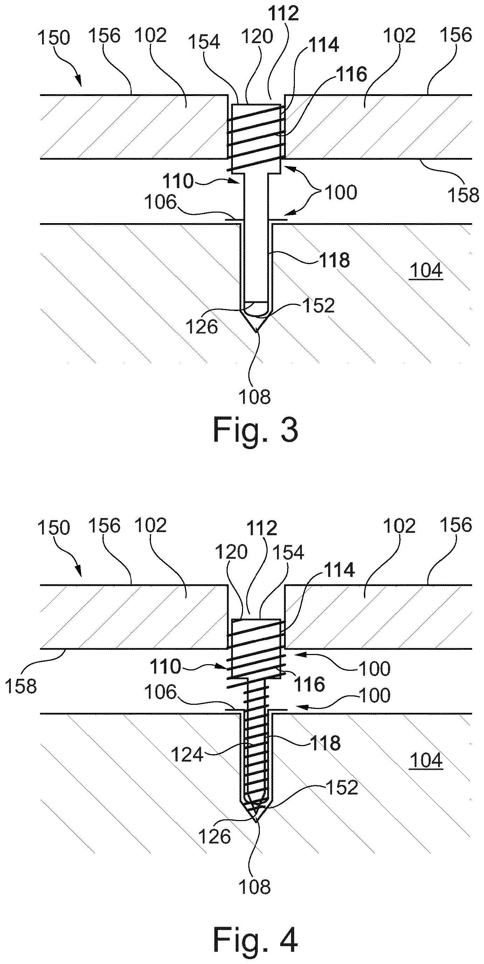

Eine in **Figur 3** dargestellte Anordnung 150 gemäß einem weiteren Ausführungsbeispiel der Erfindung unterscheidet sich von der Anordnung 150 gemäß Figur 1 insbesondere dadurch, dass gemäß Figur 3 das Dübelgewinde 124 weggelassen ist. Stattdessen ist bei dem bevorzugten Ausführungsbeispiel gemäß Figur 3 der zweite Endabschnitt 118 als gewindefreier glatter Bolzenabschnitt ausgebildet. Beim Setzen des Befestigungselements 110 gemäß Figur 3 bewirkt das Rahmengewinde 116 wiederum eine Befestigung des Befestigungselements 110 an dem Rahmen 102. Eine gewisse Befestigung des Befestigungselements 110 in dem Dübel 106 und daher an dem Untergrund 104 wird gemäß Figur 3 dadurch erreicht, dass bei Eindrehen des Befestigungselements 110 der gewindefreie Bolzenabschnitt des zweiten Endabschnitts 118 beim Einführen in die Aufnahmeöffnung des Dübels 106 Spreizelemente des Dübels 106 nach außen hin verschiebt und dadurch gegen die Wandung des Untergrunds 104 verpresst. Dies erfolgt allerdings ebenfalls, ohne dass sich der zweite Endabschnitt 118 des Befestigungselements 110 in dem Dübel 106 ein Gewinde schneidet. Daher bleibt es bei einer relativ losen bzw. lockeren reibschlüssigen Kopplung zwischen dem ersten Endabschnitt 114 des Befestigungselements 110 und dem Dübel 106. Es kommt daher nur zum Ausbilden einer reibschlüssigen Verbindung zwischen dem gewindefreien zweiten Endabschnitt 118 des Befestigungselements 110 und dem Dübel 106 sowie mittelbar mit dem Untergrund 104. Gemäß der Ausführungsform von Figur 3 ist nicht nur das Ausbilden bzw. Walzen eines Dübelgewindes an dem Befestigungselement 110 unter Vereinfachung des Herstellungsprozesses entbehrlich, sondern es ist auch eine gewisse Ausgleichsbewegung möglich, wenn zum Beispiel thermische Ausdehnung die geometrischen Verhältnisse der Anordnung 150 verändert oder sich der Rahmen 102 im Laufe der Zeit mechanisch verändert, zum Beispiel durch Arbeiten von Holz des Rahmens 102. Außerdem hat sich herausgestellt, dass die rein reibschlüssige Verbindung zwischen dem gewindefreien zweiten Endabschnitt 118 gemäß Figur 3 ausreicht, um Windkräfte aufzunehmen, wie sie bei Gebäuden auftreten.

Eine in **Figur 4** dargestellte Anordnung 150 gemäß einer weiteren Ausführungsform, die nicht durch die beanspruchte Erfindung abgedeckt ist, unterscheidet sich von der in Figur 1 dargestellten Anordnung 1 dadurch, dass sich gemäß Figur 4 das Ende 126 des zweiten Endabschnitts 118 des Befestigungselements 110 über ein Ende des Dübels 106 hinaus erstreckt. Da dies weder die Befestigung des Rahmens 102 mittels des ersten Endabschnitts 114 noch die Befestigung des zweiten Endabschnitts 118 am Dübel 106 und daher mittelbar am Untergrund 104 beeinträchtigt, zeigt die Ausführungsform gemäß Figur 4 die hohe Flexibilität bei der Verwendung eines Montagesets 100 für unterschiedliche Einbausituationen.

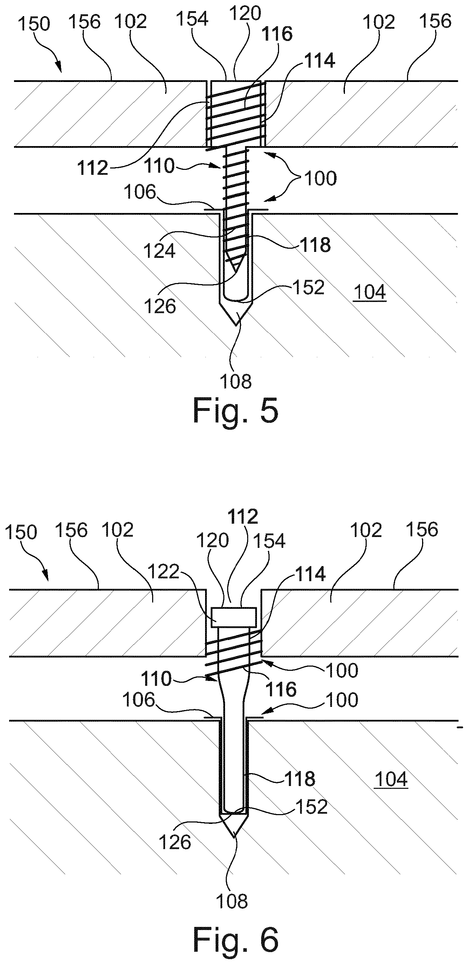

Eine in **Figur 5** dargestellte Anordnung 150 gemäß einer weiteren Ausführungsform, die nicht durch die beanspruchte Erfindung abgedeckt ist, unterscheidet sich von der Anordnung 150 gemäß Figur 1 im Wesentlichen dadurch, dass gemäß Figur 5 die Stirnfläche 154 des Befestigungselements 110 gegenüber einer äußeren Hauptfläche 156 des Rahmens ausgerichtet ist bzw. bezüglich dieser fluchtend ausgebildet ist. Gleichzeitig ist gemäß Figur 5 das Ende 126 nur teilweise in den Aufnahmehohlraum des Dübels 106 eingeführt, so dass ein befestigungselementfreies Ende des Aufnahmehohlraums verbleibt. Dies ist zulässig, solange der in den Dübel 106 eingeführte Teilbereich des zweiten Endabschnitts 118 ausreichend lang ist, um eine ausreichende Verankerung des Befestigungselements 102 in dem Untergrund 104 vermittels des Dübels 106 zu erreichen. Die Befestigung des Rahmens 102 an dem Befestigungselement 110 mittels des ersten Endabschnitts 114 ist gemäß Figur 5 besonders stabil ausgebildet, da über die gesamte Axialerstreckung des Durchgangslochs 112 eine Gewindeverbindung zwischen dem Rahmengewinde 116 und dem Rahmen 102 ermöglicht ist.

Das Ausführungsbeispiel der Anordnung 150 gemäß **Figur 6** unterscheidet sich von dem der Anordnung 150 gemäß Figur 3 durch das Ausbilden eines Kopfes 122 in der in Figur 2 dargestellten Weise.

Wie anhand der Beschreibung der Ausführungsformen von Figur 1 bis Figur 6 für einen Fachmann ersichtlich, können die unterschiedlichen Merkmale des Montagesets in beliebiger Weise mittlerweile miteinander kombiniert werden.

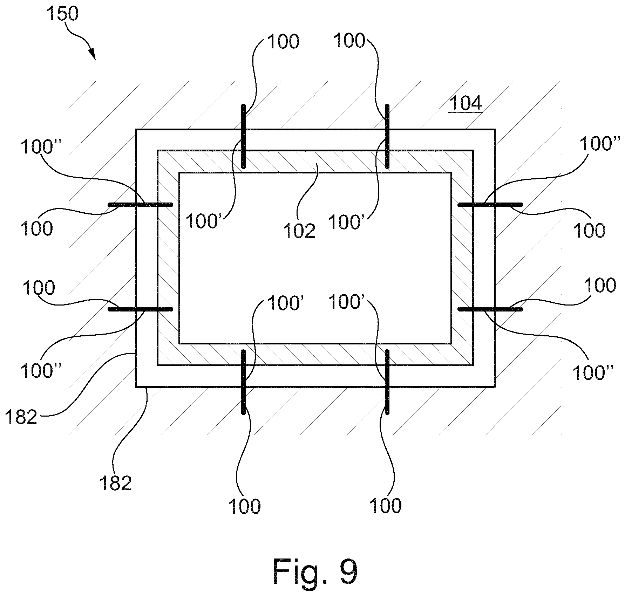

**Figur 9** zeigt eine Anordnung 150 gemäß einem exemplarischen Ausführungsbeispiel der Erfindung. Die Anordnung 150 weist einen als Wand ausgebildeten Untergrund 104, einen in eine Laibung 182 des Untergrunds 104 eingesetzten Fensterrahmen 102 und mehrere Montagesets 100 auf. Jedes der Montagesets 100 ist aus einem als Schraube ausgebildeten Befestigungselement 110 und einem Kunststoff-Dübel 106 gebildet, wie oben beschrieben.

Bei dem Ausführungsbeispiel gemäß Figur 9 sind zwei Typen von Montagesets 100 vorgesehen, nämlich ein erster mit Bezugszeichen 100' ausgebildeter Montagesatz und ein zweiter mit Bezugszeichen 100" ausgebildeter Montagesatz. Der erste Montagesatz 100' bezieht sich auf die vertikal gesetzten Befestigungselemente 110 und zugehörigen Dübel 106, wohingegen sich der zweite Montagesatz 100" auf die horizontal gesetzten Befestigungselemente 110 und zugehörigen Dübel 106 bezieht. Die Befestigungselemente 110 des ersten Montagesatzes 100' können als Schrauben mit Dübelgewinde 124 ausgebildet sein (wie in Figur 1, Figur 2, Figur 4 und Figur 5 dargestellt) oder können als Schrauben mit glattem zweiten Endabschnitt 118 (d.h. ohne Dübelgewinde 124) ausgebildet sein (wie in Figur 3 und Figur 6 dargestellt). Im Unterschied hierzu können die Befestigungselemente 100 des zweiten Montagesatzes 100" bevorzugt als Schrauben mit glattem zweiten Endabschnitt 118 (d.h. ohne Dübelgewinde 124) ausgebildet sein.

Anschaulich können die Schrauben mit glattem zweiten Endabschnitt 118 zum Aufnehmen von Windlasten dienen und erlauben eine gewisse Ausgleichsbewegung. Die Schrauben mit Dübelgewinde 124 können für eine besonders stabile Befestigung sorgen.

In einem Ausführungsbeispiel ist es auch möglich, dass die Montagesets 100" Befestigungselemente 110 mit glattem zweiten Endabschnitt 118 ohne Dübelgewinde 124 haben und die an der Unterseite des Fensterrahmens 102 angebrachten Montagesets 100' Befestigungselemente mit Dübelgewinde 124 aufweisen. Die an der Oberseite des Fensterrahmens 102 angebrachten Montagesets 100' können Befestigungselemente mit oder ohne Dübelgewinde 124 aufweisen.

Es ist auch möglich, bei jedem der Montagesets 100, die bei der Montage eines Rahmens 102 an einem Untergrund 104 verwendet werden (beispielsweise in einer Geometrie entsprechend Figur 9), die Befestigungselemente 110 aller Montagesets 100 ohne Dübelgewinde 124 bzw. mit einem gewindefreien Bolzenabschnitt als glatter zweiter Endabschnitt 118 auszubilden. Bei einer solchen Ausführungsform ist es zum Beispiel möglich, zunächst die seitlichen bzw. horizontal verlaufenden Befestigungselemente 110 zu setzen und nachfolgend die vertikal verlaufenden Befestigungselemente 110 zu setzen. Allgemeiner kann es vorteilhaft sein, bei einer Anordnung mit mehreren Montagesets 100 (zum Beispiel in der in Figur 9 dargestellten Weise) mindestens ein Befestigungselement 110 von mindestens einem Montageset 100 ohne Dübelgewinde 124 und mit einem dübelfreien Bolzen als zweitem Endabschnitt 118 auszugestalten.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Montageset (100) zum Montieren eines Rahmens (102) an einem Untergrund (104), wobei das Montageset (100) aufweist:
einen Dübel (106) zum Einbringen in ein Bohrloch (108) in dem Untergrund (104); und
ein Befestigungselement (110) zum Durchführen durch ein Durchgangsloch (112) in dem Rahmen (102) und zum Einführen in den Dübel (106) in dem Bohrloch (108);
wobei ein erster Endabschnitt (114) des Befestigungselements (110) zum Einführen in das Durchgangsloch (112) dimensioniert ist und ein Rahmengewinde (116) zum haltenden Eingreifen in den Rahmen (102) aufweist;
wobei ein dem ersten Endabschnitt (114) gegenüberliegender zweiter Endabschnitt (118) des Befestigungselements (110) zum Einführen in den Dübel (106) zum Befestigen des Befestigungselements (110) mittels des Dübels (106) an dem Untergrund (104) ausgebildet ist, ohne dass sich der zweite Endabschnitt (118) des Befestigungselements (110) in dem Dübel (106) ein Gewinde schneidet,
wobei der zum Einführen in den Dübel (106) ausgebildete zweite Endabschnitt (118) des Befestigungselements (110) gewindefrei ausgebildet ist.

2. Montageset (100) gemäß Anspruch 1, wobei der zum Einführen in den Dübel (106) ausgebildete zweite Endabschnitt (118) des Befestigungselements (110) mit glatter Außenfläche ausgebildet ist.

3. Montageset (100) gemäß Anspruch 1 oder 2, wobei der erste Endabschnitt (114) des Befestigungselements (110) zum vollständigen und gewindeschneidenden Einführen in ein, insbesondere kreiszylindrisches, Durchgangsloch (112) dimensioniert und geformt ist.

4. Montageset (100) gemäß einem der Ansprüche 1 bis 3, wobei in einer Stirnfläche des ersten Endabschnitts (114) des Befestigungselements (110) ein Antrieb (120) zum Drehantreiben des Befestigungselements (110) ausgebildet ist.

5. Montageset (100) gemäß einem der Ansprüche 1 bis 4, wobei der erste Endabschnitt (114) des Befestigungselements (110) als kopffreier Rahmengewindeabschnitt ausgebildet ist.

6. Montageset (100) gemäß einem der Ansprüche 1 bis 4, wobei der erste Endabschnitt (114) des Befestigungselements (110) mit einem Kopf (122) und einem daran angrenzenden Rahmengewindeabschnitt ausgebildet ist, wobei ein Außendurchmesser (d3) des Kopfs (122) einen Außendurchmesser (d4) des Rahmengewindes (116) nicht überschreitet.

7. Montageset (100) gemäß einem der Ansprüche 1 bis 6, wobei ein Außendurchmesser (d1) des ersten Endabschnitts (114) des Befestigungselements (110) größer ist als ein Außendurchmesser (d2) des zweiten Endabschnitts (118) des Befestigungselements (110).

8. Anordnung (150), aufweisend:
einen Untergrund (104);
ein Montageset (100) gemäß einem der Ansprüche 1 bis 7; und
einen Rahmen (102);
wobei der Rahmen (102) mittels des Montagesets (100) an dem Untergrund (104) befestigt ist.

9. Anordnung (150) gemäß Anspruch 8, mit zumindest einem der folgenden Merkmale:
wobei ein dem Untergrund (104) abgewandter Abschnitt des Durchgangslochs (112) von dem Befestigungselement (110) frei ist;
wobei eine Stirnfläche des ersten Endabschnitts (114) des Befestigungselements (110) mit einer dem Untergrund (104) abgewandten Begrenzungsfläche (156) des Rahmens (102) fluchtet;
wobei ein bohrlochinnenseitiges Ende (126) des Befestigungselements (110) gegenüber einem bohrlochinnenseitigen Ende (152) eines Aufnahmelochs des Dübels (106) in bohrlochaußenseitiger Richtung zurückversetzt ist oder über den Dübel (106) in Setzrichtung hinaussteht;
wobei der Rahmen (102) in einem Abstand (D) von dem Untergrund (104) beabstandet montiert ist;
wobei der Dübel (106) nur in das Bohrloch (108) und nicht in das Durchgangsloch (112) eingeführt ist;
wobei der Rahmen (102) ein Fensterrahmen oder ein Türrahmen ist.

10. Verfahren zum Montieren eines Rahmens (102) an einem Untergrund (104), wobei das Verfahren aufweist:
Einbringen eines Dübels (106) in ein Bohrloch (108) in dem Untergrund (104);
Durchführen eines Befestigungselements (110) durch ein Durchgangsloch (112) in dem Rahmen (102) und Einführen in den Dübel (106) in dem Bohrloch (108);
Einführen eines ersten Endabschnitts (114) des Befestigungselements (110) in das Durchgangsloch (112) derart, dass ein Rahmengewinde (116) an dem ersten Endabschnitt (114) in den Rahmen (102) eingreift und den Rahmen (102) hält; und
Einführen eines dem ersten Endabschnitt (114) gegenüberliegenden zweiten Endabschnitts (118) des Befestigungselements (110) in den Dübel (106) zum Befestigen des Befestigungselements (110) mittels des Dübels (106) an dem Untergrund (104), ohne dass sich der zweite Endabschnitt (118) des Befestigungselements (110) in dem Dübel (106) ein Gewinde schneidet,
wobei der zum Einführen in den Dübel (106) ausgebildete zweite Endabschnitt (118) des Befestigungselements (110) gewindefrei ausgebildet ist.

11. Verfahren gemäß Anspruch 10, mit zumindest einem der folgenden Merkmale:
wobei das Verfahren ein vollständiges Einführen des ersten Endabschnitts (114) des Befestigungselements (110) in das Durchgangsloch (112) derart aufweist, dass eine außenseitige Stirnfläche (154) des Befestigungselements (110) außenseitig nicht über eine dem Untergrund (104) abgewandte Hauptfläche (156) des Rahmens (102) hervorsteht;
wobei das Verfahren ein vollständiges Einführen des ersten Endabschnitts (114) des Befestigungselements (110) in das Durchgangsloch (112) derart aufweist, dass eine außenseitige Stirnfläche (154) des Befestigungselements (110) im Inneren des Durchgangslochs (112) des Rahmens (102) angeordnet wird;
wobei das Verfahren ein vollständiges Einführen des ersten Endabschnitts (114) des Befestigungselements (110) in das Durchgangsloch (112) derart aufweist, dass eine außenseitige Stirnfläche (154) des Befestigungselements (110) mit einer dem Untergrund (104) abgewandten äußeren Begrenzungsfläche (156) des Rahmens (102) fluchtet;
wobei das Verfahren ein Einführen des ersten Endabschnitts (114) des Befestigungselements (110) in das Durchgangsloch (112) derart aufweist, dass das Rahmengewinde (116) zu einem ersten Teil in den Rahmen (102) eingreift und zu einem zweiten Teil gegenüber einer dem Untergrund (104) zugewandten Hauptfläche (158) des Rahmens (102) in Richtung Untergrund (104) hervorsteht;
wobei das Verfahren ein Einführen des zweiten Endabschnitts (118) des Befestigungselements (110) in den Dübel (106) derart aufweist, dass ein freies Ende (126) des zweiten Endabschnitts (118) bis zu einem Ende einer Einführöffnung des Dübels (106) reicht;
wobei das Verfahren ein Einführen des zweiten Endabschnitts (118) des Befestigungselements (110) in den Dübel (106) derart aufweist, dass ein freies Ende (126) des zweiten Endabschnitts (118) gegenüber einem Ende einer Einführöffnung des Dübels (106) derart zurückversetzt ist, dass ein Teil der Einführöffnung des Dübels (106) von den Befestigungselement (110) frei bleibt;
wobei das Verfahren ein Einführen des zweiten Endabschnitts (118) des Befestigungselements (110) in den Dübel (106) derart aufweist, dass ein freies Ende (126) des zweiten Endabschnitts (118) durch ein Ende einer Einführöffnung des Dübels (106) austritt und in Setzrichtung im Vergleich zu dem Dübel (106) tiefer in das Bohrloch (108) hervorsteht;
wobei das Verfahren ein Einführen des zweiten Endabschnitts (118) des Befestigungselements (110) in den Dübel (106) unter Verspreizung des Dübels (106) gegen eine Wandung des Untergrunds (104) aufweist;
wobei das Verfahren ein reibschlüssiges Einführen des gewindefreien, insbesondere glatten, zweiten Endabschnitts (118) des Befestigungselements (110) in den Dübel (106) aufweist.

12. Verwendung mehrerer identischer Montagesets (100) gemäß einem der Ansprüche 1 bis 7 zum Montieren von jedem von einer Mehrzahl von Rahmen (102) an einem jeweiligen Untergrund (104) mit unterschiedlichen Setztiefen des jeweiligen Befestigungselements (110) in dem jeweiligen Rahmen (102) und/oder mit unterschiedlichen Abständen (D) des jeweiligen Rahmens (102) von dem jeweiligen Untergrund (104) und/oder mit unterschiedlichen Eindringtiefen des jeweiligen Befestigungselements (110) in dem jeweiligen Dübel (106).

## Claims

1. A mounting kit (100) for mounting a frame (102) to a background (104), the mounting kit (100) comprising:
a dowel (106) for insertion into a drilled hole (108) in the background (104); and
a fastening element (110) for passing through a through hole (112) in the frame (102) and for insertion into the dowel (106) in the drilled hole (108);
wherein a first end portion (114) of the fastening element (110) is sized for insertion into the through hole (112) and has a frame thread (116) for retaining engagement with the frame (102);
wherein a second end portion (118) of the fastening element (110) opposite the first end portion (114) is sized for insertion into the dowel (106) for securing the fastening element (110) to the background (104) by means of the dowel (106) without the second end portion (118) of the fastening element (110) threading into the dowel (106),
wherein the second end portion (118) of the fastening element (110) formed for insertion into the dowel (106) is formed without threads.

2. The mounting kit (100) according to claim 1, wherein the second end portion (118) of the fastening element (110) formed for insertion into the dowel (106) is formed with a smooth outer surface.

3. The mounting kit (100) according to claim 1 or 2, wherein the first end portion (114) of the fastening element (110) is dimensioned and shaped for complete and tapping insertion into a through hole (112), in particular a circular cylindrical through hole.

4. The mounting kit (100) according to any one of claims 1 to 3, wherein a drive (120) for rotationally driving the fastening element (110) is formed in an end face of the first end portion (114) of the fastening element (110).

5. The mounting kit (100) according to any one of claims 1 to 4, wherein the first end portion (114) of the fastening element (110) is formed as a headless frame threaded portion.

6. The mounting kit (100) according to any one of claims 1 to 4, wherein the first end portion (114) of the fastening element (110) is formed with a head (122) and a frame threaded portion adjacent thereto, wherein an outer diameter (d3) of the head (122) does not exceed an outer diameter (d4) of the frame thread (116).

7. The mounting kit (100) according to any one of claims 1 to 6, wherein an outer diameter (d1) of the first end portion (114) of the fastening element (110) is larger than an outer diameter (d2) of the second end portion (118) of the fastening element (110).

8. An assembly (150), comprising:
a background (104);
a mounting kit (100) according to any one of claims 1 to 7; and
a frame (102);
wherein the frame (102) is attached to the background (104) by means of the mounting kit (100).

9. The assembly (150) according to claim 8, comprising at least one of the following features:
wherein a portion of the through hole (112) facing away from the background (104) is free of the fastening element (110);
wherein an end surface of the first end portion (114) of the fastening element (110) is aligned with a boundary surface (156) of the frame (102) facing away from the background (104);
wherein an inner borehole end (126) of the fastening element (110) is recessed from an inner borehole end (152) of a receiving hole of the dowel (106) in an outer borehole direction or protrudes beyond the dowel (106) in a setting direction;
wherein the frame (102) is mounted spaced apart from the background (104) by a distance (D);
wherein the dowel (106) is inserted only into the drilled hole (108) and not into the through hole (112);
wherein the frame (102) is a window frame or a door frame.

10. A method of mounting a frame (102) to a background (104), the method comprising:
inserting a dowel (106) into a drilled hole (108) in the background (104);
passing a fastening element (110) through a through hole (112) in the frame (102) and inserting it into the dowel (106) in the drilled hole (108);
inserting a first end portion (114) of the fastening element (110) into the through hole (112) such that a frame thread (116) on the first end portion (114) engages the frame (102) and holds the frame (102); and
inserting a second end portion (118) of the fastening element (110) opposite the first end portion (114) into the dowel (106) to secure the fastening element (110) by the dowel (106) to the background (104) without the second end portion (118) of the fastening element (110) threading into the dowel (106),
wherein the second end portion (118) of the fastening element (110) formed for insertion into the dowel (106) is formed without threads.

11. The method according to claim 10, having at least one of the following features:
the method comprising fully inserting the first end portion (114) of the fastening element (110) into the through hole (112) such that an outside end face (154) of the fastening element (110) does not protrude outside a major surface (156) of the frame (102) facing away from the background (104);
wherein the method comprises fully inserting the first end portion (114) of the fastening element (110) into the through hole (112) such that an outside end face (154) of the fastening element (110) is disposed inside the through hole (112) of the frame (102);
wherein the method comprises fully inserting the first end portion (114) of the fastening element (110) into the through hole (112) such that an outside end surface (154) of the fastening element (110) is aligned with an outer boundary surface (156) of the frame (102) facing away from the background (104);
wherein the method comprises inserting the first end portion (114) of the fastening element (110) into the through hole (112) such that the frame thread (116) engages the frame (102) at a first part and protrudes toward the background (104) at a second part opposite a major surface (158) of the frame (102) facing the background (104);
wherein the method comprises inserting the second end portion (118) of the fastening element (110) into the dowel (106) such that a free end (126) of the second end portion (118) extends to an end of an insertion opening of the dowel (106);
wherein the method comprises inserting the second end portion (118) of the fastening element (110) into the dowel (106) such that a free end (126) of the second end portion (118) is recessed from an end of an insertion opening of the dowel (106) such that a portion of the insertion opening of the dowel (106) remains free of the fastening element (110);
wherein the method comprises inserting the second end portion (118) of the fastening element (110) into the dowel (106) such that a free end (126) of the second end portion (118) protrudes through an end of an insertion opening of the dowel (106) and protrudes deeper into the drilled hole (108) in the setting direction relative to the dowel (106);
wherein the method comprises inserting the second end portion (118) of the fastening element (110) into the dowel (106) while spreading the dowel (106) against a wall of the background (104);
wherein the method comprises frictionally inserting the threadless, in particular smooth, second end portion (118) of the fastening element (110) into the dowel (106).

12. A use of several identical mounting kits (100) according to any one of claims 1 to 7 for mounting each of a plurality of frames (102) to a respective background (104) with different setting depths of the respective fastening element (110) in the respective frame (102) and/or with different distances (D) of the respective frame (102) from the respective background (104) and/or with different penetration depths of the respective fastening element (110) in the respective dowel (106).

## Revendications

1. Kit de montage (100) permettant de monter un cadre (102) sur un support (104), le kit de montage (100) présentant :
une cheville (106) à insérer dans un trou de forage (108) présent dans le support (104) ; et
un élément de fixation (110) à faire passer à travers un trou traversant (112) présent dans le cadre (102) et à introduire dans la cheville (106) présente dans le trou de forage (108) ;
où une première section terminale (114) de l'élément de fixation (110) est dimensionnée pour être introduite dans le trou traversant (112) et présente un filet de cadre (116) permettant une mise en prise de retenue dans le cadre (102) ;
où une seconde section terminale (118) de l'élément de fixation (110) opposée à la première section terminale (114) est conçue pour être introduite dans la cheville (106) afin de fixer l'élément de fixation (110) au fond (104) au moyen de la cheville (106), sans que la seconde section terminale (118) de l'élément de fixation (110) ne taraude un filet dans la cheville (106),
où la seconde section terminale (118) de l'élément de fixation (110) conçue pour être introduite dans la cheville (106) est conçue sans filet.

2. Kit de montage (100) selon la revendication 1, où la seconde section terminale (118) de l'élément de fixation (110) conçue pour être insérée dans la cheville (106) est conçue avec une surface extérieure lisse.

3. Kit de montage (100) selon la revendication 1 ou 2, où la première section terminale (114) de l'élément de fixation (110) est dimensionnée et formée pour être introduite de manière complète et taraudante dans un trou traversant (112), en particulier cylindrique circulaire.

4. Kit de montage (100) selon l'une quelconque des revendications 1 à 3, où un entraînement (120) permettant d'entraîner en rotation l'élément de fixation (110) est conçu dans une surface terminale de la première section terminale (114) de l'élément de fixation (110).

5. Kit de montage (100) selon l'une quelconque des revendications 1 à 4, où la première section terminale (114) de l'élément de fixation (110) est conçue en tant que section sans tête à filet pour cadre.

6. Kit de montage (100) selon l'une quelconque des revendications 1 à 4, où la première section terminale (114) de l'élément de fixation (110) est conçue avec une tête (122) et une section à filet pour cadre adjacente à ladite tête, où un diamètre extérieur (d3) de la tête (122) ne dépasse pas un diamètre extérieur (d4) du filet pour cadre (116).

7. Kit de montage (100) selon l'une quelconque des revendications 1 à 6, où un diamètre extérieur (d1) de la première section terminale (114) de l'élément de fixation (110) est supérieur à un diamètre extérieur (d2) de la seconde section terminale (118) de l'élément de fixation (110).

8. Agencement (150), présentant :
un support (104) ;
un kit de montage (100) selon l'une quelconque des revendications 1 à 7 ; et
un cadre (102) ;
où le cadre (102) est fixé au support (104) au moyen du kit de montage (100).

9. Agencement (150) selon la revendication 8, présentant au moins une des caractéristiques ci-dessous :
où une section du trou traversant (112) opposée au support (104) est exempte d'élément de fixation (110) ;
où une surface terminale de la première section terminale (114) de l'élément de fixation (110) est alignée avec une surface de délimitation (156) du cadre (102) opposée au fond (104) ;
où une extrémité (126), située côté intérieur de trou de forage, de l'élément de fixation (110) est en retrait par rapport à une extrémité (152), située côté intérieur de trou de forage, d'un trou de réception de la cheville (106) en direction de l'extérieur du trou de forage ou dépasse de la cheville (106) dans la direction de pose ;
où le cadre (102) est monté à une certaine distance (D) du support (104) ;
où la cheville (106) n'est insérée que dans le trou de forage (108) et non dans le trou traversant (112) ;
où le cadre (102) est un cadre de fenêtre ou un cadre de porte.

10. Procédé de montage d'un cadre (102) sur un support (104), où le procédé comprend les étapes consistant à :
insérer une cheville (106) dans un trou de forage (108) présent dans le support (104) ;
faire passer un élément de fixation (110) à travers un trou traversant (112) présent dans le cadre (102) et l'introduire dans la cheville (106) présente dans le trou de forage (108) ;
introduire une première section terminale (114) de l'élément de fixation (110) dans le trou traversant (112) de telle manière qu'un filet pour cadre (116) vient en prise dans le cadre (102) au niveau de la première section terminale (114) et retient le cadre (102) ; et
introduire une seconde section terminale (118) de l'élément de fixation (110), opposée à la première section terminale (114), dans la cheville (106) afin de fixer l'élément de fixation (110) au support (104) au moyen de la cheville (106), sans que la seconde section terminale (118) de l'élément de fixation (110) ne taraude un filet dans la cheville (106),
où la seconde section terminale (118) de l'élément de fixation (110) conçue pour être introduite dans la cheville (106) est conçue sans filet.

11. Procédé selon la revendication 10, présentant au moins l'une des caractéristiques ci-dessous :
où le procédé comprend l'introduction complète de la première section terminale (114) de l'élément de fixation (110) dans le trou traversant (112) de telle manière qu'une surface terminale extérieure (154) de l'élément de fixation (110) ne dépasse pas extérieurement d'une surface principale (156) du cadre (102) opposée au support (104) ;
où le procédé comprend l'introduction complète de la première section terminale (114) de l'élément de fixation (110) dans le trou traversant (112) de telle manière qu'une surface terminale extérieure (154) de l'élément de fixation (110) est agencée à l'intérieur du trou traversant (112) du cadre (102) ;
où le procédé comprend l'introduction complète de la première section terminale (114) de l'élément de fixation (110) dans le trou traversant (112) de telle manière qu'une surface terminale extérieure (154) de l'élément de fixation (110) est alignée avec une surface de délimitation extérieure (156) du cadre (102) opposée au support (104) ;
où le procédé comprend l'introduction de la première section terminale (114) de l'élément de fixation (110) dans le trou traversant (112) de telle manière que le filet pour cadre (116), en ce qui concerne une première partie, vient en prise dans le cadre (102) et, en ce qui concerne une seconde partie, dépasse en direction du support (104) par rapport à une surface principale (158) du cadre (102) tournée vers le support (104) ;
où le procédé comprend l'introduction de la seconde section terminale (118) de l'élément de fixation (110) dans la cheville (106) de telle manière qu'une extrémité libre (126) de la seconde section terminale (118) s'étend jusqu'à une extrémité d'un orifice d'introduction de la cheville (106) ;
où le procédé comprend l'introduction de la seconde section terminale (118) de l'élément de fixation (110) dans la cheville (106) de telle manière qu'une extrémité libre (126) de la seconde section terminale (118) est en retrait par rapport à une extrémité d'un orifice d'introduction de la cheville (106) de telle manière qu'une partie de l'orifice d'introduction de la cheville (106) reste exempte d'élément de fixation (110) ;
où le procédé comprend l'introduction de la seconde section terminale (118) de l'élément de fixation (110) dans la cheville (106) de telle manière qu'une extrémité libre (126) de la seconde section terminale (118) sort à travers une extrémité d'un orifice d'introduction de la cheville (106) et dépasse de la cheville (106) pour venir plus profondément dans le trou de forage (108) dans la direction de pose ;
où le procédé comprend l'introduction de la seconde section terminale (118) de l'élément de fixation (110) dans la cheville (106) avec ancrage de la cheville (106) contre une paroi du support (104) ;
où le procédé comprend l'introduction, avec verrouillage par friction, de la seconde section terminale (118) sans filet, en particulier lisse, de l'élément de fixation (110) dans la cheville (106).

12. Utilisation de plusieurs kits de montage (100) identiques selon l'une quelconque des revendications 1 à 7 pour monter chaque cadre parmi une pluralité de cadres (102) sur un support (104) respectif avec différentes profondeurs de pose de l'élément de fixation (110) respectif dans le cadre (102) respectif et/ou avec différentes distances (D) entre le cadre (102) respectif et le support (104) respectif et/ou avec différentes profondeurs de pénétration de l'élément de fixation (110) respectif dans la cheville (106) respective.
